# EUROPEAN PATENT SPECIFICATION

(11) **EP 1 366 665 B1**
(45) Date of publication and mention of the grant of the patent: **24.05.2006**
(21) Application number: 02425341.1
(22) Date of filing: 29.05.2002
(51) Int. Cl.: A21B 1/42, A21B 5/00

(54) **Machine for cooking and/or pre-cooking thin unleavened loaves**
Maschine zum Kochen und/oder Vorkochen von dünnen, treibmittelfreien Laiben
Appareil de cuisson et/ou précuisson de miches minces, sans un agent levant

(43) Date of publication of application: 03.12.2003
(73) Proprietor: I.G.F. Italstampi di Fabbri Giancarlo & C. S.n.c., 47826 Villa Verucchio (Rimini) (IT)
(72) Inventor: Fabbri, Giancarlo, 47826 Villa Verucchio (Rimini) (IT); Fabbri, Luciano, 61015 Novafeltria (Pesaro) (IT)
(74) Representative: Lanzoni, Luciano

(56) References cited:
- FR-A- 2 658 388
- US-A- 3 718 487
- US-A- 4 751 876
- US-A- 5 441 755
- US-A- 5 481 963

## Description

The present invention relates to a machine for cooking and/or for pre-cooking thin unleavened loaves, in particular for cooking and/or pre-cooking the so-called "piade" (or "piadine").

Many culinary traditions entail the use of thin unleavened loaves of various types. Said unleavened loaves are constituted by a thin layer of edible material (generally round shaped) which, obtained by flattening or crushing small loaves obtained from a homogeneous dough made with various ingredients, is subsequently cooked by placing it on a very hot iron plate.

In a geographical area of Italy called Romagna, widespread use is made of a particular, very thin, type of said unleavened loaves, known as "piada" (or "piadina"), instead of bread. The "piada" is traditionally hand produced by homemakers, who obtain it from a dough made by mixing wheat flour with water and salt. To the dough are generally added determined quantities of oil (generally olive oil) and/or of lard (generally pork lard). The dough is worked and divided into loaves that are flattened until forming the "piade". The "piada" is then cooked, also manually, on the iron plate, rapidly overturning it several times with the aid of a knife in order to cook both faces uniformly. The quality of the final product depends not only on the quality of the ingredients and of the way the dough was worked, but also to a considerable extent on the cooking process, whose optimisation derives from the homemaker's own experience.

For many years, in Romagna, craftsmen's shops have produced loose cooked "piade", which are sold directly in retail fashion for direct consumption at the counter. Recently, many such shops have reached industrial or nearly industrial dimensions and produce pre-cooked "piade" in packages, which are then sold in supermarkets or stores. Such pre-cooked "piade" require only rapid heating to be consumed by the final user. This industrial method of production and distribution has brought about a widespread consumption of the "piada" throughout Italy's territory and is contributing to its fame and widespread consumption abroad as well.

In the industrial production of "piada", the process of forming and working the dough, the production of the loaves and their lamination to form the raw "piade" are usually automated using corresponding machinery.

The operations of packaging the cooked "piade" into packets for shipment are obviously automated as well.

To assure that the final product has a quality level equivalent to that of the traditional "piada" obtained at home by an expert homemaker, in many firms the "piada" is, instead, still cooked by hand, in the traditional manner, on gas- or electrically heated iron or steel plates. To reach a productivity level of about 10,000 pre-cooked "piade" every 8 hours (average productivity of an average size workshop), therefore, the simultaneous work of many people is necessary.

Document FR2658388 discloses a machine for manufacturing flat food products by cooking a dough. The cooking takes place, first, via one face of the product, on one face of a hot plate which can tip from above about a horizontal axis in order to deposit the cooked product, in the overturned state, on a face of another hot plate thus capable of cooking also the second face of the product. After it has been cooked on its second face, the product may be transferred on a stacking device or on a conveyor by overturning the second cooking plate upwards about a horizontal axis. Each plate comprises two pneumatic jacks for actuating the rotation of the plate itself in the two opposite direction.

Automatic machines are known for cooking thin unleavened loaves, in particular "piade", in which a steel cooking plate has annular shape, is able to rotate about its axis and is heated, from below, by gas-fired burners. The raw unleavened loaves, previously set down on a loading conveyor belt, are thereby laid onto the inner part of the plate itself. Whilst they rotate with the plate, the loaves undergo a first cooking on a face. After about one rotation, the loaves meet a second conveyor belt that constitutes an ascending ramp, positioned transversely above to plate, to overturn the loaf. Thanks to the fact that, as a result of the first cooking phase, they have achieved a certain consistency, the loaves get on this second belt, assisted in so doing also by the guidance of one or more contrasting rollers positioned at the inlet of the belt itself. At the end of the ramp, the loaf is overturned by the recirculation of the belt, possibly aided by other contrasting rollers, and it falls back onto an outer part of the plate, bearing thereon the face yet to be cooked. At the end of a further rotation, during which the second face also undergoes a cooking process, the loaves are drawn from the plate and sent on to be packaged.

Although they do reach high productivity levels, such machines for cooking and/or pre-cooking thin unleavened loaves have some drawbacks. In particular, since the motion of the loaf along the overturning ramp is necessarily slow, the loaf, being thin, tends to lose during its overturning a considerable quantity of heat and to cool down before falling, overturned, onto the cooking plate. This cooling partly compromises the quality of the cooking operation. Moreover, the machine overturns the loaf only once. The behaviour of the machine is far from a proper simulation of the cooking conditions achieved during manual cooking, wherein the homemaker overturns the loaf very rapidly without giving it time to cool down and repeats this operation more than once.

Also known are machines for cooking and/or for pre-cooking thin unleavened loaves in which the loaves are cooked on a linear conveyor belt heated inferiorly, for instance by oil. Along the conveyor belt are positioned one or more segments of belt arranged as a ramp to determine the overturning of the loaf on the opposite face, according to a principle that is similar to that of the technology described above.

In a variation of this type of machine, multiple linear cooking conveyor belts are provided, parallel and superposed at a certain mutual distance, which alternatively recirculate in opposite directions. The loaf, upon reaching the end of a cooking belt, because of the recirculation thereof is conveyed in overturned position on the underlying belt thanks to the action of contrasting rollers and of a connecting belt ramp.

These two types of machines for cooking and/or pre-cooking thin unleavened loaves, however, are also not free from drawbacks. In particular, in addition to having the same problems as the technology described above in relation to the overturning of the loaves (in particular of the "piade") on the cooking plane, these machines can also be very bulky. They, too, are not capable of providing a product that is at the same quality level as the traditional "piada" prepared manually at home, although they do provide for overturning the loaf several times.

Aim of the present invention is to overcome the aforesaid drawbacks, making available a machine for cooking and/or for pre-cooking thin unleavened loaves which is able to replicate as exactly as possible, on an industrial scale, the homemaker's behaviour in cooking the "piada", allowing to obtain a high quality product.

Another aim of the present invention is to make available a machine for cooking and/or pre-cooking thin unleavened loaves which allows to optimise cooking parameters according to the level of cooking and to the final quality of the product.

These aims and others beside, which shall become more readily apparent from the description that follows, are achieved, in accordance with the present invention, by a machine for cooking and/or for pre-cooking thin unleavened loaves in accordance with the main claim and with the accompanying dependent claims.

The invention is described in greater detail hereafter with the aid of the drawings, which show an embodiment provided purely by way of non limiting example.
- Figure 1 shows, respectively: in a) a plan view of the machine of the invention; in b) a lateral view with some parts removed and other sectioned in the plane indicated as A-A; in c) a lateral view according to the same direction of observation of the section;
- Figure 2 shows a detail of the loading station of a variation of the machine of the invention, in particular: the left part is a lateral view of the opposite part to that of the view of Figure 1 in a); the right part is a front view of the side of the loading station;
- Figure 3 shows a second detail of the loading station of a variation of the machine of the invention;
- Figure 4 shows a cross section of a cooking plate;
- Figure 5 shows a succession of the motions implemented by the machine for the cooking of thin unleavened loaves.
- Figure 6 schematically shows in diagram form the synchronisation of the operation of the loading station and of the cooking plate in a variation of the invention.

The present invention is particularly suited to the cooking and/or to the pre-cooking of that particular type of thin unleavened loaf known with the name of "piada" and, therefore, in the description that follows, when generally speaking of loaves reference shall tend to be made to the issues related to the cooking of the "piada" in particular. However, this does not at all intend to exclude the applicability of the present invention also to the cooking and/or to the pre-cooking of any other type of thin unleavened loaf different from the "piada".

With reference to the figures, a machine 1 for cooking and/or for pre-cooking thin unleavened loaves comprises a cooking surface for cooking thin unleavened loaves 2, heating elements 3 for heating the cooking surface, a loading station 4 for loading the loaves 2 to be cooked on the cooking surface and a removal station 5 for removing the cooked or pre-cooked loaves 2.

The cooking surface comprises a succession of at least two cooking plates 6, positioned consecutively to each other along a direction 7 of flow of the loaves 2 from the loading station 4 to the removal station 5. Each cooking plate 6 is able to rotate in the direction 7 of flow about an axis 8 substantially corresponding with its side 9 transversal to the direction 7 of flow from a first substantially horizontal position to a second overturned position. In the first substantially horizontal position the cooking plate 6 considered can receive at least a loaf 2 to be cooked. In the second overturned position the cooking plate 6 considered transfers the overturned loaf 2 either onto the cooking plate 6 immediately following it along the direction 7 of flow, if the cooking plate 6 is not the last one of the succession, or on the removal station 5, if the cooking plate 6 considered is the last one of the succession. The first cooking plate 6 along the succession receives the loaf 2 from the loading station 4.

The machine comprises actuating means 10 for actuating the rapid rotation of the cooking plate 6.

The overturning of the cooking plate 6 exactly reproduces the action of a homemaker in the cooking of the loaf 2 and, being executed rapidly by the actuating means 10, allows to obtain a high quality product. In the short time necessary for its overturning, the cooking plate 6 does not lose an excessive quantity of heat and the loaf 2 is not subjected to harmful cooling. The flow of the loaves 2 from the loading station 4 to the removal station 5 is determined by the rotation in succession of the cooking plates 6 that are overturned shifting from the first to the second position.

Opportunely, to allow each loaf 2 to be overturned at least twice during the cooking operation, the cooking plates 6 comprised in the succession are at least four.

Each cooking plate 6 can allow the loading and processing of at least two thin unleavened loaves 2 at the same time, achieving a valid compromise between high productivity and compactness of the machine, suitable in particular for a small work shop.

Advantageously, alternatively, to allow a maximisation of the productivity, each cooking plate 6 can be structured to allow the loading and processing of a plurality of thin unleavened loaves 2 simultaneously.

The cooking plates 6 are made of a metallic material (iron or steel of the kind suitable for food processing). They can be at least superiorly coated with a layer of adhesion-preventing material.

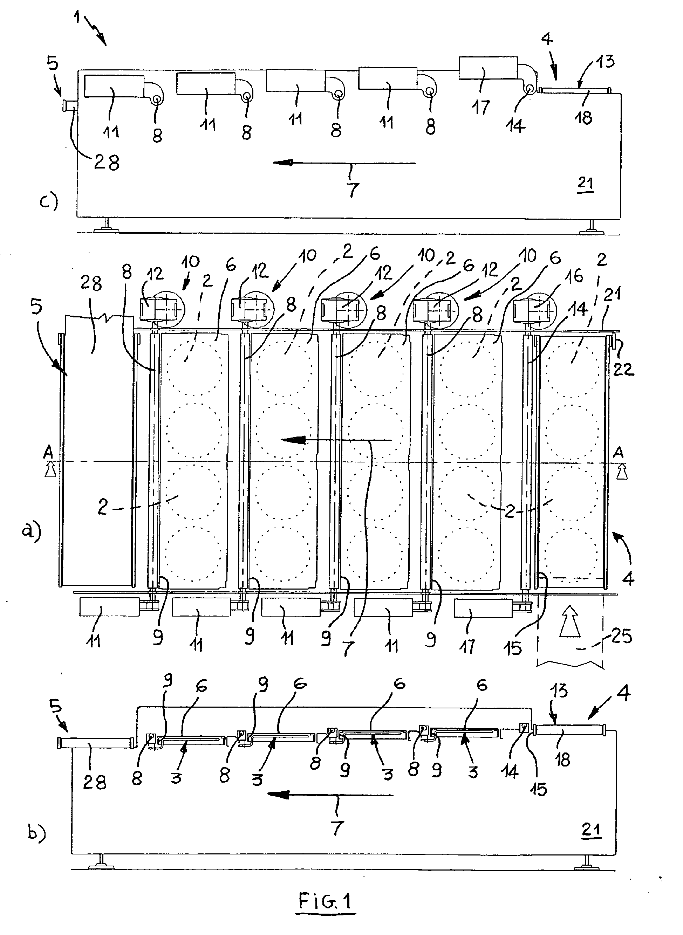

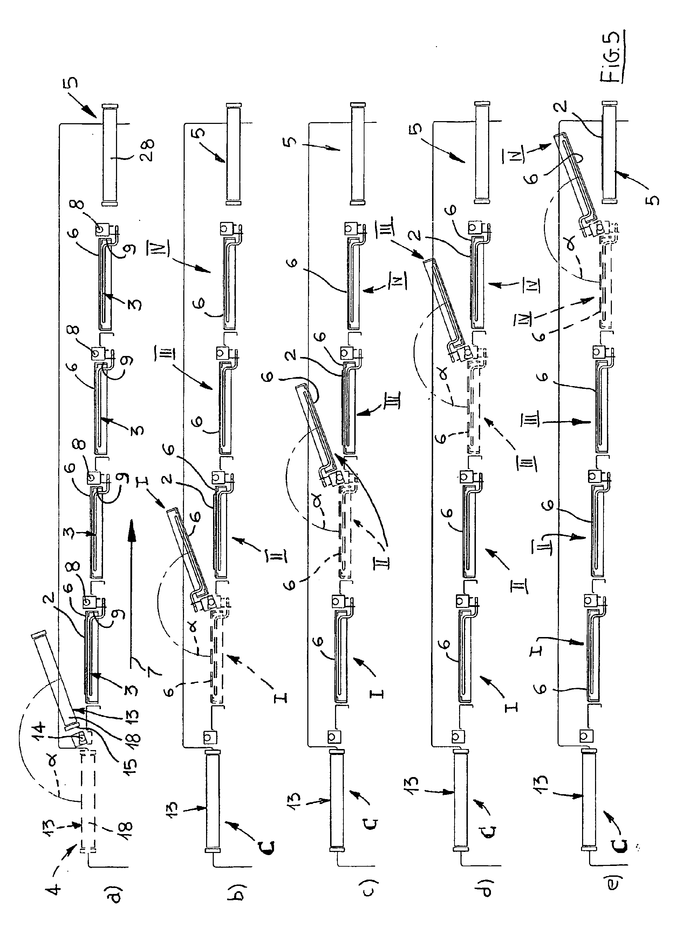

As Figures 1 and 5 clearly show, the machine 1 opportunely comprises an independent heating element 3 for each cooking plate 6. This solution allows for a greater versatility of the machine, since, advantageously, an independent temperature control can be provided on each cooking plate 6, which, allowing a differentiated choice of the cooking temperatures on each different cooking plate 6, allows an optimal determination of the cooking parameters.

The heating elements 3 could be fixed and only the cooking plate 6 could rotate rapidly. Preferably, however, as Figures 1, 4 and 5 clearly show, the heating element 3 of each cooking plate 6 can be integrally connected thereto and thereby participate in its movements, which allows the loaf 2 never to lose any heat even during the time interval (which in any case is much shorter than in prior art machines) necessary to overturn the loaf 2 itself on the subsequent cooking plate 6.

The heating elements 3 are preferably electrical. The use of electrical, and not gas-fired, heaters minimises safety problems, allows to use smaller work spaces and to have fewer compliance requirements in terms of air circulation.

Opportunely, for each cooking plate 6 is provided a support check (not shown herein) for stabilising the first position. This is particular advantageous when the actuating means 10 for actuating the rapid rotation of the cooking plates 6 comprise motors and gear assemblies with non irreversible behaviour, or to reduce the positioning inaccuracy due to any play.

Preferably, the second overturned position is rotated, relative to the first position, by an angle α greater than 140°. In a preferred embodiment of the invention illustrated in Figures 1 and 5 the cooking plates 6 lie, in the first position, on substantially horizontal planes, mutually offset and located at decreasing heights along the direction 7 of flow. This allows to minimise the distances between a cooking plate 6 and the plates 6 contiguous thereto, and to achieve values of the overturning angle α approaching 180°.

To favour the action of the actuating means 10, which have to rotate the cooking plates 6 very rapidly, the machine 1 advantageously comprises, for each cooking plate 6, a counter-weight 11 integrally associated to the plate 6 at the opposite side of the axis 8 of rotation. The rotary behaviour of the assembly composed by the cooking plate 6 and by its related counter-weight 11 is much more neutral, with obvious advantages on the dimensioning and on the requirements of the actuating means 10.

Opportunely, to enable to maximise versatility in the use of the machine 1, the actuating means 10 for actuating the rapid rotation of the cooking plates 6 comprise a motor 12 for each cooking plate 6, for an independent control of the movements of the cooking plates 6. Preferably, said motors 12 are electrical.

Advantageously, the machine 1 comprises a timing and control unit (not shown in the figures) for timing and controlling the movements of the cooking plates 6, that implements a procedure whereby each cooking plate 6, in synchrony with the others:
- waits, for an overturning time TA, to be loaded with a loaf 2 by the overturning of the plate 6 immediately preceding it or, if the plate 6 considered is the first in the succession, by the action of the loading station 4;
- remains in the first position for a time TCP of partial cooking of the loaf 2;
- is overturned in the overturning time TA, unloading the overturned loaf 2 into the plate 6 immediately following it or, if the considered plate 6 is the last one in the succession, onto the removal station 5;
- moves back, in a return time TR, from the second to the first position to receive a new loaf 2.

Also provided are safety sensors that give to the timing and control unit the assent to move each given plate 6 only when the plates 6 that are immediately contiguous thereto in the succession are in the first position.

This procedure allows safely to optimise productive times, since it mutually synchronises the movements of all cooking plates 6 and the behaviour of the loading and removal stations 4, 5.

Moreover, the various times provided, in particular the times TCP of partial cooking, can be adjustable. The optimal time TCP of partial cooking depends, among other things, on the temperature of the cooking plates 6. An average value thereof in the order of about ten seconds can allow to obtain good results.

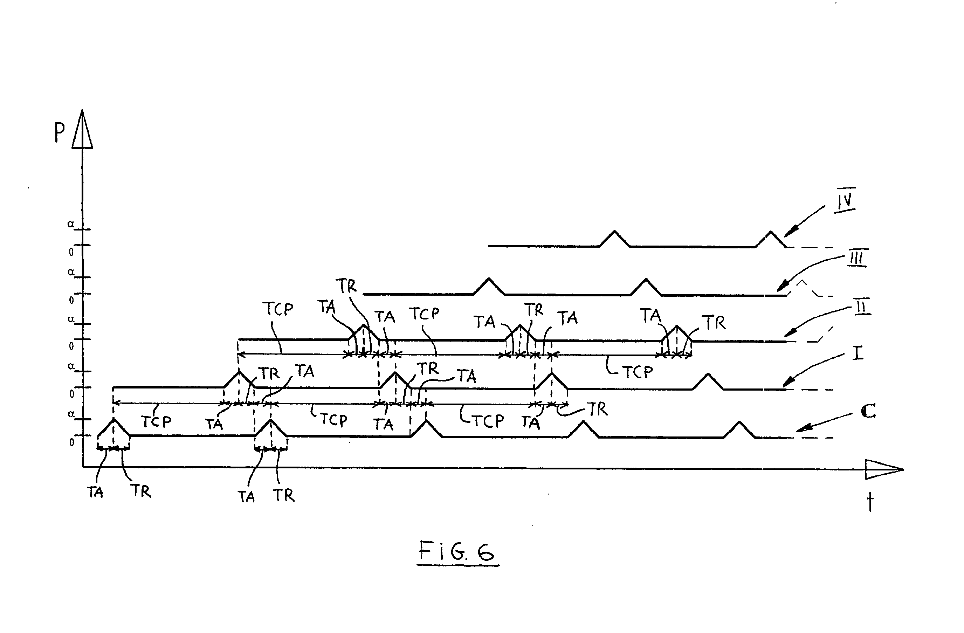

The movements obtained based on the procedure implemented by the timing and control unit are schematically shown by the diagram provided in Figure 6. It shows the time diagrams of the synchronised movements of four consecutive cooking plates 6, located between the loading station 4 and the removal station 5.

Roman numerals I, II, III, IV respectively indicate the time diagrams of the movements of the first, of the second, of the third and of the fourth cooking plates 6 of the succession of plates 6 located between the loading station 4 and the removal station 5.

The x-axis represents time, whilst the y-axis shows, for each cooking plate 6, the angular position of the plate itself, between the angular value 0 (corresponding to the first, substantially horizontal, position of the cooking plate 6) and the angular value α (corresponding to the second, overturned, position of the cooking plate 6). The synchronisation of the behaviour of the cooking plates 6 is readily apparent from Figure 6.

For the sake of grater clarity of interpretation, to allow clearly to identify the correspondence between the diagrams of Figure 6 and the parts of the machine 1 whereto they refer, the same Roman numerals I, II, III, IV are also used in Figure 5 to indicate the corresponding physical components of the machine 1. In reading the two figures in combination, one must however consider that purpose of Figure 5 is simply to describe the flow of the loaves 2 in relation to the movements of the cooking plates 6 and, to this end, it shows an example of movements obviously corresponding to a different synchronisation level from the one shown by the diagrams of Figure 6.

Very opportunely, in a preferred embodiment of the invention shown in the figures, the loading station 4 comprises a loading plane 13, also able to rotate in the direction 7 of flow about an axis 14 of rotation, substantially corresponding with its side 15 transversal to the direction 7 of flow, from a first substantially horizontal configuration to a second overturned configuration.

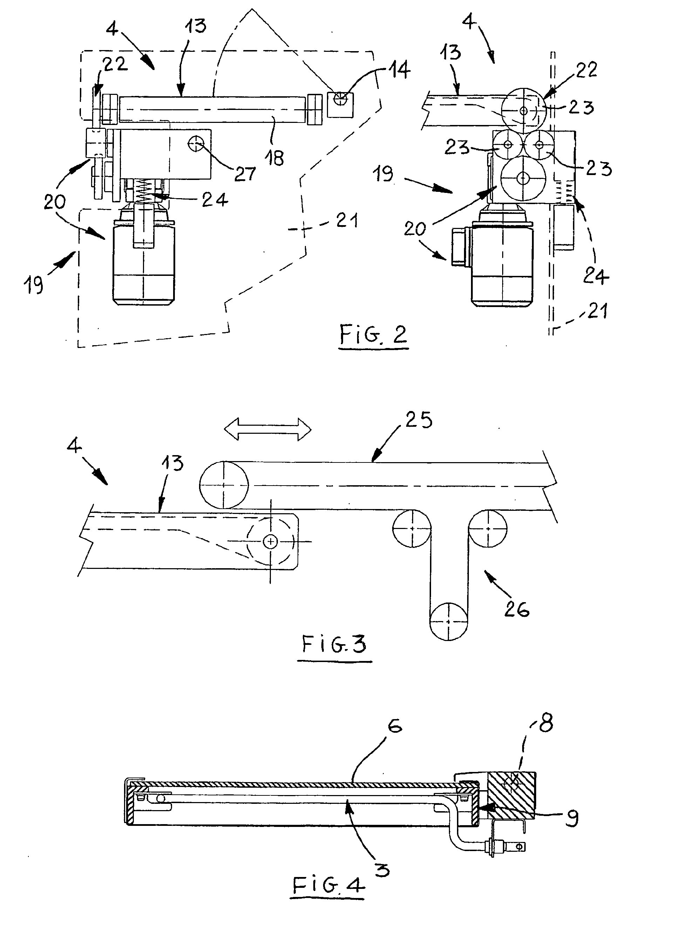

In the first substantially horizontal configuration, the loading plane 13 can receive at least a raw loaf 2, for instance from a feeding belt 25 which, as shown in Figures 1 and 3, can be brought above the loading plane 13 and then withdrawn with the aid of recovery mechanisms 26 (for instance, gravitational, using transmissions and weights).

In the second overturned configuration, the loading plane 13 transfers the overturned loaf 2 onto the cooking plate 6 that is first in the succession (i.e. the one indicated as I in Figures 5 and 6).

Obviously, if the feeding of loaves 2 on the loading plane 13 is accomplished by means of the feeding belt 25, the latter will have to be withdrawn before overturning the loading plane 13 on the cooking plate 6 that is first in the succession (i.e. the one indicated as I in Figures 5 and 6). The forward-backward motion of the feeding belt 25 is shown in Figure 3, whilst Figure 1 shows the feeding direction.

In this variation, the machine further comprises an actuating motor 16 for actuating the rapid rotation of the loading plane 13. Opportunely, the loading station 4 also comprises an additional counterweight 17 integrally associated to the loading plane 13 at the opposite side of the axis 14 of rotation to favour the action of the actuating motor 16.

In this way the loading plane 13 exactly replicates all movements of each cooking plate 6. The synchronisation of its movements with those of the cooking plates 6 by the timing and control unit is thereby rendered particularly simple. In particular, the loading plane 13 can also be rotated by the same angle α. Moreover, when it is in the first configuration, the loading plane 13 can lie on a horizontal plane that is slightly higher than the horizontal plane wherein lies, in the first position, the cooking plate 6 that is first in the succession.

In Figure 6, the letter C indicates the time diagram of the movements of the loading plane 13 as they are synchronised, by the timing and control unit, with the corresponding movements of the cooking plates 6. For the sake of greater clarity of interpretation, once again, letter C was also used in Figure 5 to indicate the corresponding physical component of the machine 1 (i.e., in this case, the loading plane 13).

Advantageously, in a preferred embodiment of the invention shown in the figures, the loading plane 13 is constituted by at least a conveyor belt 18, recirculating parallel to the axis 14 of rotation with a stepped movement actuated by a motor assembly 19, for feeding loaves 2 in front of that cooking plate 6 that is the first one in the succession of plates 6.

The conveyor belt 18 can be actuated in steps and fed by the feeding belt 25 which, at this point, as shown in Figure 1 in a), can be superposed to the conveyor belt 18 only in correspondence with an end (and, obviously, withdrawn before overturning the loading plane 13, constituted by the conveyor belt 18, on the first cooking plate 6).

Advantageously, a first part 20 of the motor assembly 19, comprising the motorisation, is associated to the body 21 of the machine 1 and does not participate in the motion to overturn the loading plane 13, whilst a second part 22 of the motor assembly 19 is integral with the motion to overturn the loading plane 13 and is coupled with the first part 20 only when the loading plane 13 is in the first configuration.

This avoids the need to drive the whole motor assembly 19 in the motion to overturn the loading plane 13.

In particular, opportunely, as shown in Figure 2, when the loading plane 13 is in the first configuration the coupling between the first and the second part 20, 22 of the motor assembly 19 is provided by the simple contact between friction wheels 23. Advantageously, moreover, as Figure 2 also shows, the first part 20 is vertically movable in opposition to the action of elastic contrasting means 24, said means being loaded by the bearing of the second part 22 on the first part 20 when the loading plane 13 is in the first configuration. This latter solution allows always to obtain an optimal coupling between the first and the second part 20, 22 of the motor assembly 19, when the loading plane 13 is in the first configuration, in a manner that is relatively independent from the mechanical play or from the wear of the friction wheels 23. The vertical movement of the first part 20 can be obtained simply by hinging the first part 20 to the body 21 of the machine 1 (as shown in particular in the left part of Figure 2), for example on a pivot pin 27. This allows always to have a perfect contact between the friction wheels 23 of the first and of the second part 20, 22, since the movement of the first part 20 tends to follow the rotation movement to overturn the loading plane 13.

In general, the overturning of the last cooking plate 6 of the succession (i.e. the one indicated with the Roman numeral IV in Figures 5 and 6) on the removal station 5 determines the unloading of the cooked (or pre-cooked) loaves 2 on the removal station 5 itself. The removal station 5 then carries the loaves 2 to the packaging areas. The removal station 5 can comprise one or more slides, or, as shown in the figures, a belt 28 can be positioned in various manners to transport the cooked (or pre-cooked) loaves 2 when required (in the figures, it is positioned parallel to the axis of rotation of the cooking plates 6 and removes the loaves 2 in lateral direction to the machine 1, but it could be oriented differently depending on the requirements and structure of the production line).

In general, the ability separately to set and adjust the temperature of each individual cooking plate 6, coupled with the ability, through the timing and control unit, to adjust the duration of the time TCP of partial cooking of a loaf 2 on each individual cooking plate 6, allows wide freedom in selecting the fundamental cooking parameters. This ability can be very important to enable to obtain a product whose quality level is high and constant, especially in cases such as the production of "piade", in which the final result can also depend on environmental conditions as well as on the characteristics of the dough in use.

With reference, in particular, to Figures 5 and 6 and to a preferred embodiment, the operation of the invention is as follows.

After being fed with raw loaves 2, the loading plane 13 is overturned, in an overturning time TA, on the cooking plate 6 indicated, in Figures 5 and 6, with the Roman numeral I, depositing thereon loaves 2 to be cooked with a first face in contact with the cooking plate 6. This cooking plate 6 remains motionless for a time TCP of partial cooking of the loaf 2 (during which the loading plane 13 is brought to the first configuration in a return time TR to receive other raw loaves 2) and then is in itself overturned, in an overturning time TA, on the successive cooking plate 6, indicated with the Roman numeral II in Figures 5 and 6, depositing thereon the overturned loaves 2 for a cooking phase on the second face. The cooking plate 6 indicated with the Roman numeral II in turn remains motionless for a time TCP of partial cooking, whilst the preceding plate 6 (i.e. the one indicated with the Roman numeral I) returns, in a return time TR, to the first position to receive, from the loading plane 13, new raw loaves 2. At the end of the time TCP of partial cooking, the cooking plate 6 indicated with the Roman numeral II itself is overturned, in an overturning time TA, on the subsequent cooking plate 6, indicated with the Roman numeral III in Figures 5 and 6, depositing thereon the overturned loaves for a subsequent second cooking phase on the first face. The cooking plate 6 indicated with the Roman numeral III in turn remains motionless for a time TCP of partial cooking, whilst the previous plate 6 (i.e. the one indicated with the Roman numeral II) returns, in a return time TR, in the first position to receive, from the preceding cooking plate 6 (indicated with I), new loaves 2 to be cooked on the second face. At the end of the time TCP of partial cooking, the cooking plate 6 indicated with the Roman numeral III itself is overturned, in an overturning time TA, on the subsequent cooking plate 6, indicated with the Roman numeral IV in Figures 5 and 6 depositing thereon the overturned loaves 2 for a subsequent second cooking phase on the secon face. The cooking plate 6 indicated with the Roman numeral IV in turn remains motionless for a time TCP of partial cooking, whilst the preceding plate 6 (i.e. the one indicated with the Roman numeral III) returns, in a return time TR, to the first position to receive, from the preceding cooking plate 6 (indicated as II), new loaves 2 to be cooked anew on the first face. At the end of the time TCP of partial cooking, the cooking plate 6 indicated with the Roman numeral IV is itself overturned, in an overturning time TA, on the removal station 5, which carries the cooked loaves 2 for their packaging. The cooking plate 6 indicated with the Roman numeral IV then returns, in a return time TR, to the first position to receive, from the previous cooking plate 6 (indicated with III), new loaves 2 to be cooked anew on the second face and so on.

At the end of the cooking path, each loaf 2 has been overturned twice.

The invention achieves important advantages.

First of all, the traditional manual cooking method is exactly reproduced, whilst maintaining high productivity levels. The quality standard reached by the final product is high. It is possible to set and optimise in detail the parameters for cooking the loaves according to requirements, in particular times and temperatures, thereby allowing a high versatility of operation of the machine.

## Claims

1. Machine (1) for cooking and/or for pre-cooking thin unleavened loaves, comprising a cooking surface for cooking thin unleavened loaves (2), heating elements (3) for heating the cooking surface, a loading station (4) for loading the loaves (2) to be cooked on the cooking surface, a removal station (5) for removing the cooked or pre-cooked loaves (2), wherein:
- the cooking surface comprises a succession of at least two cooking plates (6), positioned consecutively to each other along a direction (7) of flow of the loaves (2) from the loading station (4) to the removal station (5), each cooking plate (6) being able to rotate in the direction of flow (7) about an axis (8) substantially corresponding with its side (9) transversal to the direction (7) of flow from a first substantially horizontal position, in which the cooking plate (6) considered can receive at least a loaf (2) to be cooked, to a second overturned position, in which the cooking plate (6) considered transfers the overturned loaf (2) either on the cooking plate (6) immediately following it along the direction (7) of flow, if the cooking plate (6) considered is not the last one in the succession, or on the removal station (5), if the cooking plate (6) considered is the last one in the succession, the first cooking plate (6) along the succession receiving the loaf (2) from the loading station (4);
- the machine comprises actuating means (10) for actuating the rapid rotation of the cooking plate (6);
**characterised in that** a counterweight (11) is integrally associated to the plate (6) at the opposite side and the free end of the axis (8) of rotation to favour the action of the actuating means (10) provided or one side of the axis (8).

2. Machine (1) as claimed in claim 1, **characterised in that** the cooking plates (6) of the succession are at least four.

3. Machine (1) as claimed in claim 1 or 2, **characterised in that** for each cooking plate (6) is provided a support check for the stabilisation of the first position.

4. Machine (1) as claimed in claim 1 or 2 or 3, **characterised in that** the second overturned position is rotated, relative to the first position, by an angle (α) greater than 140°.

5. Machine (1) as claimed in claim 4, **characterised in that** the cooking plates (6) lie, in the first position, on substantially horizontal planes mutually offset and positioned at decreasing heights along the direction (7) of flows.

6. Machine (1) as claimed in any of the previous claims, **characterised in that** the actuating means (10) for actuating the rapid rotation of the cooking plates (6) comprise a motor (12) for each cooking plate (6), for an independent control of the movements of the cooking plates (6).

7. Machine (1) as claimed in any of the previous claims, **characterised in that** it comprises a timing and control unit for timing and controlling the movements of the cooking plates (6), implementing a procedure whereby each cooking plate (6) in synchrony with the others:
- waits, for an overturning time (TA), to be loaded with a loaf (2) by the overturning of the immediately preceding plate (6) or, if the considered plate (6) is the first in the succession, by the action of the loading station (4);
- remains in the first position for a time (TCP) of partial cooking of the loaf (2);
- is overturned in the overturning time (TA), unloading the overturned loaf (2) on the plate (6) immediately following it or, if the considered plate (6) is the last one in the succession, on the removal station (5);
- moves back in a return time (TR) from the second to the first position to receive a new loaf (2);
safety sensors being provided which give to the timing and control unit their consent to move each given plate (6) only when the plates (6) that are immediately contiguous thereto in the succession are in the first position.

8. Machine (1) as claimed in claim 7, **characterised in that** at least the time (TCP) of partial cooking of the loaf (2) is adjustable.

9. Machine (1) as claimed in any of the previous claims, **characterised in that** it comprises an independent heating element (3) for each cooking plate (6).

10. Machine (1) as claimed in claim 9, **characterised in that** it provides an independent temperature control on each cooking plate (6).

11. Machine (1) as claimed in claim 9 or 10, **characterised in that** the heating element (3) of each cooking plate (6) is integrally connected thereto and participates in its movements.

12. Machine (1) as claimed in any of the claims from 9 to 11, **characterised in that** the heating elements (3) are electrical.

13. Machine (1) as claimed in any of the previous claims, **characterised in that** the loading station (4) comprises:
- a loading plane (13), also able to rotate in the direction (7) of flow about an axis (14) of rotation substantially corresponding with its side (15) transversal to the direction (7) of flow from a first substantially horizontal configuration, in which the loading plane (13) can receive at least a raw loaf (2), to a second overturned configuration, in which the loading plane (13) transfers the overturned loaf (2) on the cooking plate (6) that is first in the succession;
- an actuating motor (16) for actuating the rapid rotation of the loading plane (13).

14. Machine (1) as claimed in claim 13, **characterised in that** the loading station (4) comprises an additional counterweight (17) integrally associated to the loading plane (13) at the opposite side of the axis (14) of rotation to favour the action of the actuating motor (16).

15. Machine (1) as claimed in claim 13 or 14, **characterised in that** the loading plane (13) is constituted by at least a conveyor belt (18), recirculating parallel to the axis of rotation (14) with a stepped movement actuated by a motor assembly (19), for feeding loaves (2) in front of the cooking plate (6) that is the first in the succession of plates (6).

16. Machine (1) as claimed in claim 15, **characterised in that** a first part (20) of the motor assembly (19), comprising the motorisation, is associated to the body (21) of the machine (1) and does not participate in the motion to overturn the loading plane (13), whilst a second part (22) of the motor assembly (19) is integral to the motion to overturn the loading plane (13) and is coupled with the first part (20) only when the loading plane (13) is in the first configuration.

17. Machine (1) as claimed in claim 16, **characterised in that** when the loading plane is in the first configuration the coupling between the first and the second part (20, 22) of the motor assembly (19) is given by the contact between friction wheels (23).

18. Machine (1) as claimed in claim 17, **characterised in that** the first part (20) is vertically movable in opposition to the action of elastic contrast means (24), the latter being loaded by the bearing of the second part (22) on the first part (20) when the loading plane (13) is in the first configuration.

19. Machine (1) as claimed in any of the previous claims, **characterised in that** the cooking plates (6) are made of metallic material.

20. Machine (1) as claimed in claim 19, **characterised in that** the cooking plates (6) are at least superiorly coated with a layer of adhesion-preventing material.

21. Machine (1) as claimed in any of the previous claims, **characterised in that** each cooking plate (6) allows to load and process at least two thin unleavened loaves (2) simultaneously.

22. Machine as claimed in claim 21, **characterised in that** each cooking plate (6) allows to load and process a plurality of thin unleavened loaves (2) simultaneously.

## Patentansprüche

1. Anlage (1) zum Backen und/oder Vorbacken von dünnen, treibmittelfreien Fladen, enthaltend eine Backfläche zum Backen dünner, treibmittelfreier Fladen (2), Heizelemente (3) zum Heizen der Backfläche, eine Ladestation (4) zum Laden der auf der B ackfläche zu b ackenden F laden ( 2), eine Entnahmestation (5) zum Entnehmen der gebackenen oder vorgebackenen Fladen (2), in welcher:
- die Backfläche eine Folge von wenigstens zwei Backplatten (6) enthält, angeordnet aufeinanderfolgend entlang einer Vorlaufrichtung (7) der Fladen (2) von der Ladestation (4) zu der Entnahmestation (5), wobei jede Backplatte (6) in der Vorlaufrichtung (7) um eine Achse (8) gedreht werden kann, die im wesentlichen ihrer Seite (9) quer zu der Vorlaufrichtung (7) entspricht, und zwar aus einer ersten, im wesentlichen horizontalen Position, in welcher die betreffende Backplatte (6) wenigstens einen zu backenden Fladen (2) aufnehmen kann, in eine zweite gekippte Position, in welcher die betreffende Backplatte (6) den umgedrehten F laden ( 2) entweder auf die unmittelbar entlang der Vorlaufrichtung (7) folgende Backplatte (6) transferiert, wenn die betreffende Backplatte (6) nicht die letzte in der F olge i st, oder a uf d ie E ntnahmestation (5, w enn die betreffende Backplatte (6) die letzte in der Folge ist, wobei die erste Backplatte (6) der Folge den Fladen (2) von der Ladestation (4) erhält;
- die Anlage Antriebsmittel (10) zum schnellen Drehen der Backplatte (6) enthält;
**dadurch gekennzeichnet, dass** ein Gegengewicht (11) vollkommen mit der Platte (6) verbunden ist, und zwar auf der entgegengesetzten Seite von der Drehachse (8) und dem freien Ende, um die Arbeit der Antriebsmittel (10), die auf der einer Seite der Achse (8) vorgesehen sind, zu begünstigen.

2. Anlage (1) nach Patentanspruch 1, **dadurch gekennzeichnet, dass** die Backplatten (6) der Folge wenigstens vier sind.

3. Anlage (1) nach Patentanspruch 1 oder 2, **dadurch gekennzeichnet, dass** für jede Backplatte (6) eine Auflage zur Stabilisierung der ersten Position vorgesehen ist.

4. Anlage (1) nach Patentanspruch 1 oder 2 oder 3, **dadurch gekennzeichnet, dass** die zweite gekippte Position im Verhältnis zu der ersten Position um einen Winkel (α) von mehr als 140° gedreht ist.

5. Anlage (1) nach Patentanspruch 4, **dadurch gekennzeichnet, dass** die Backplatten (6) in der ersten Position auf im wesentlichen horizontalen Ebenen liegen, versetzt zueinander und auf abnehmenden Höhen entlang der Vorlaufrichtung (7).

6. Anlage (1) nach einem jeden der vorstehenden Patentansprüche, **dadurch gekennzeichnet, dass** die Antriebsmittel (10) z um A uslösen der schnellen U mdrehung d er B ackplatten (6) einen Motor (12) für jede Backplatte (6) enthalten, um die Bewegungen der Backplatten (6) unabhängig zu steuern.

7. Anlage (1) nach einem jeden der vorstehenden Patentansprüche, **dadurch gekennzeichnet, dass** sie eine Zeitgeber-und Steuereinheit zum Steuern der Bewegungen der Backplatten (6) enthält, die ein Verfahren durchführt, nach welchem jede Backplatte (6) synchron mit den anderen:
- für eine Kippdauer (TA) wartet, durch das Kippen der unmittelbar vorausgehenden Platte (6) mit einem Fladen (2) geladen zu werden oder, wenn die betreffende Platte (6) die erste der Folge ist, durch den Vorgang der Ladestation (4);
- für eine Dauer (TCP) des teilweisen Backens des Fladens (2) in der ersten Position verbleibt;
- während der Kippdauer (TA) gekippt wird, wobei sie den um gedrehten Fladen (2) auf die unmittelbar folgende entlädt oder, wenn die betreffende Platte (6) die letzte in der Folge ist, auf die Entnahmestation (5);
- sich während der Rücklaufdauer (TR) aus der zweiten in die erste Position zurück bewegt, um einen neuen Fladen (2) zu übernehmen;
wobei Sicherheitsfühler vorgesehen sind, welche der Zeitgeber- und Steuereinheit ihre Zustimmung geben, um jede gegebene Platte (6) nur dann zu bewegen, wenn die unmittelbar an diese angrenzenden Platten (6) der Folge sich in der ersten Position befinden.

8. Anlage (1) nach Patentanspruch 7, **dadurch gekennzeichnet, dass** wenigstens die Dauer (TCP) des teilweisen Backens des Fladens (2) einstellbar ist.

9. Anlage (1) nach einem beliebigen der vorstehenden Patentansprüche, **dadurch gekennzeichnet, dass** sie ein unabhängiges Heizelement (3) für jede Backplatte (6) hat.

10. Anlage (1) nach Patentanspruch 9, **dadurch gekennzeichnet, dass** sie eine unabhängige Temperaturregelung an jeder Backplatte (6) vorsieht.

11. Anlage (1) nach Patentanspruch 9 oder 10, **dadurch gekennzeichnet, dass** das Heizelement (3) einer jeden Backplatte (6) vollkommen mit dieser verbunden ist und sich zusammen mit dieser bewegt.

12. Anlage (1) nach einem jeden der Patentansprüche von 9 bis 11, **dadurch gekennzeichnet, dass** die Heizelemente (3) elektrisch sind.

13. Anlage (1) nach einem beliebigen der vorstehenden Patentansprüche, **dadurch gekennzeichnet, dass** die Ladestation (4) wie folgt enthält:
- eine Ladefläche (13), die ebenfalls in der Lage ist, sich in der Vorlaufrichtung (7) um eine Drehachse (14) zu drehen, die im wesentlichen mit ihrer Seite (15) quer zu der Vorlaufrichtung (7) übereinstimmt, und zwar aus einer ersten, im wesentlichen horizontalen Konfiguration, in welcher die Ladefläche (13) wenigstens eine Reihe von Fladen (2) aufnehmen kann, in eine zweite, gekippte Konfiguration, in welcher die Ladefläche (13) die umgedrehten Fladen (2) auf die Backplatte (6) transferiert, welche die erste in der Folge ist;
- einen Antriebsmotor (16) zum Auslösen der schnellen Umdrehung der Ladefläche (13).

14. Anlage (1) nach Patentanspruch 13, **dadurch gekennzeichnet, dass** die Ladestation (4) ein zusätzliches Gegengewicht (17) enthält, fest angeordnet an der Ladefläche (13) auf der entgegengesetzten Seite von der Drehachse (14), u m d ie A rbeit des A ntriebsmotors (16) zu e rleichtern.

15. Anlage (1) nach Patentanspruch 13 oder 14, **dadurch gekennzeichnet, dass** die Ladefläche (13) aus wenigstens einem Förderband (18) besteht, das parallel zu der Drehachse (14) mit einer schrittweisen Bewegung umläuft, angetrieben durch ein Antriebaggregat (19), um die Fladen (2) vor die Backplatte (6) zu führen, welche die erste in der Folge von Platten (6) ist.

16. Anlage (1) nach Patentanspruch 15, **dadurch** gekenn zeichnet, dass ein erster Teil (20) des Antriebsaggregates (19), enthaltend den Antrieb, dem Körper (21) der Anlage (1) zugeordnet ist und nichts mit dem Kippen der Ladefläche (13) zu tun hat, während ein zweiter Teil (22) des Antriebsaggregates (19) fest mit der Bewegung zum Kippen der Ladefläche (13) verbunden und mit dem ersten Teil (20) nur dann verbunden ist, wenn die Ladefläche (13) sich in der ersten Konfiguration befindet.

17. Anlage (1) nach Patentanspruch 16, **dadurch gekennzeichnet, dass**, wenn sich die Ladefläche in der ersten Konfiguration befindet, die Kupplung zwischen dem ersten und dem zweiten Teil (20, 22) des Antriebsaggregates (19) durch den Kontakt zwischen Kupplungsrädern (23) gegeben ist.

18. Anlage (1) nach Patentanspruch 17, **dadurch gekennzeichnet, dass** der erste Teil (20) vertikal entgegen der Wirkung von elastischen Gegenmitteln (24) beweglich ist, wobei letztere durch d ie Auflage des z weiten T eils (22) auf dem ersten Teil (20) belastet werden, wenn sich die Ladefläche (13) in der ersten Konfiguration befindet.

19. Anlage (1) nach einem beliebigen der vorstehenden Patentansprüche, **dadurch gekennzeichnet, dass** die Backplatten (6) aus metallenem Material hergestellt sind.

20. Anlage (1) nach Patentanspruch 19, **dadurch gekennzeichnet, dass** die Backplatten (6) wenigstens oben mit einer Schicht aus Antihaftmaterial überzogen sind.

21. Anlage (1) nach einem beliebigen der vorstehenden Patentansprüche, **dadurch gekennzeichnet, dass** jede Backplatte (6) es ermöglicht, wenigstens zwei dünne, treibmittelfreie Fladen (2) gleichzeitig zu laden und zu verarbeiten.

22. Anlage (1) nach Patentanspruch 21, **dadurch gekennzeichnet, dass** jede Backplatte (6) es ermöglicht, eine Anzahl von dünnen, treibmittelfreien Fladen (2) gleichzeitig zu laden und zu verarbeiten.

## Revendications

1. Appareil (1) de cuisson et/ou précuisson de miches minces sans agent levant, comprenant une surface de cuisson pour cuire de minces miches sans agent levant (2), des éléments de chauffage (3) pour chauffer la surface de cuisson, une station de chargement (4) pour charger les miches (2) à cuire sur la surface de cuisson, une station d'enlèvement (5) pour enlever les miches cuites ou précuites (2), dans lequel:
- la surface de cuisson comprend une succession d'au moins deux plaques de cuisson (6), positionnées consécutivement l'une à l'autre le long d'une direction (7) de flux des miches (2) de la station de chargement (4) à la station d'enlèvement (5), chaque plaque de cuisson (6) étant capable de pivoter dans la direction du flux (7) autour d'un axe (8) correspondant substantiellement à son côté (9) transversal à la direction (7) de flux d'une première position substantiellement horizontale, dans laquelle la plaque de cuisson (6) considérée peut recevoir au moins une miche (2) à cuire, à une seconde position renversée, dans laquelle la plaque de cuisson (6) considérée transfère la miche retournée (2) soit sur la plaque de cuisson (6) immédiatement suivante le long de la direction (7) de flux, si la plaque de cuisson (6) considérée n'est pas la dernière de la succession, soit sur la station d'enlèvement (5), si la plaque de cuisson (6) considérée est la dernière de la succession, la première plaque de cuisson (6) le long de la succession recevant la miche (2) de la station de chargement (4);
- l'appareil comprend des moyens d'actionnement (10) pour actionner la rotation rapide de la plaque de cuisson (6);
**caractérisé en ce qu'**un contrepoids (11) est intégralement associé à la plaque (6) sur le côté opposé et l'extrémité libre de l'axe (8) de rotation pour favoriser l'action des moyens d'actionnement (10) prévus sur un côté de l'axe (8).

2. Appareil (1) selon la revendication 1, **caractérisé en ce que** les plaques de cuisson (6) de la succession sont au moins au nombre de quatre.

3. Appareil (1) selon la revendication 1 ou 2, **caractérisé en ce que** pour chaque plaque de cuisson (6) est prévue une butée de support pour la stabilisation de la première position.

4. Appareil (1) selon la revendication 1, 2 ou 3, **caractérisé en ce que** la seconde position retournée est pivotée, par rapport à la première, d'un angle (α) supérieur à 140°.

5. Appareil (1) selon la revendication 4, **caractérisé en ce que** les plaques de cuisson ( 6) r eposent, d ans 1 a p remière p osition, s ur d es p lans s ubstantiellement horizontaux mutuellement décalés et positionnés à des hauteurs décroissantes le long de la direction (7) de flux.

6. Appareil (1) selon n'importe laquelle des revendications précédentes, **caractérisé en ce que** les moyens d'actionnement (10) pour actionner la rotation rapide des plaques de cuisson (6) comprennent un moteur (12) pour chaque plaque de cuisson (6), pour un contrôle indépendant des mouvements des plaques de cuisson (6).

7. Appareil (1) selon n'importe laquelle des revendications précédentes, **caractérisé en ce qu'**il comprend une unité de temporisation et de contrôle pour temporiser et contrôler les mouvements des plaques de cuisson (6), en exécutant une procédure selon laquelle chaque plaque de cuisson (6), en synchronisme avec les autres:
- attend, pour un temps de renversement (TA), d'être chargée avec une miche (2) par le renversement de la plaque (6) immédiatement précédente ou, si la plaque (6) considérée est la première de la succession, par l'action de la station de chargement (4);
- reste dans la première position pour un temps (TCP) de cuisson partielle de la miche (2);
- est renversée dans le temps de renversement (TA), en déchargeant la miche renversée (2) sur la plaque (6) immédiatement suivante ou, si la plaque (6) considérée est la dernière de la succession, sur la station d'enlèvement (5);
- retourne pendant un temps de retour (TR) de la seconde à la première position pour recevoir une nouvelle miche (2);
des capteurs de sécurité prévus pour donner à l'unité de temporisation et de contrôle leur consentement pour déplacer chaque plaque donnée (6) seulement lorsque les plaques (6) qui sont immédiatement contigües dans la succession sont dans la première position.

8. Appareil (1) selon la revendication 7, **caractérisé en ce qu'**au moins le temps (TCP) de cuisson partielle de la miche (2) est réglable.

9. Appareil (1) selon n'importe laquelle des revendications précédentes, **caractérisé en ce qu'**il comprend un élément de chauffage indépendant (3) pour chaque plaque de cuisson (6).

10. Appareil (1) selon la revendication 9, **caractérisé en ce qu'**il prévoit un contrôle de température indépendant sur chaque plaque de cuisson (6).

11. Appareil (1) selon la revendication 9 ou 10, **caractérisé en ce que** l'élément de chauffage (3) de chaque plaque de cuisson (6) est intégralement connecté à cette dernière et participe à ses mouvements.

12. Appareil (1) selon n'importe laquelle des revendications 9 à 11, **caractérisé en ce que** les éléments de chauffage (3) sont électriques.

13. Appareil (1) selon n'importe laquelle des revendications précédentes,
**caractérisé en ce que** la station de chargement (4) comprend:
- un plan de chargement (13), pouvant également pivoter dans la direction (7) du flux autour d'un axe (14) de rotation substantiellement correspondant avec son côté (15) transversal à la direction (7) du flux d'une première configuration substantiellement horizontale, dans laquelle le plan de chargement (13) peut recevoir au moins une m iche brute (2), à une seconde configuration renversée, dans laquelle le plan de chargement (13) transfère la miche renversée (2) sur la plaque de cuisson (6) qui est la première de la succession;
un moteur d'actionnement (16) pour actionner la rotation rapide du plan de chargement (13).

14. Appareil (1) selon la revendication 13, **caractérisé en ce que** la station de chargement (4) comprend un contrepoids additionnel (17) associé de manière intégrale au plan de chargement (13) sur le côté opposé de l'axe (14) de rotation pour favoriser l'action du moteur d'actionnement (16).

15. Appareil (1) selon la revendication 13 ou 14, **caractérisé en ce que** le plan de chargement (13) est constitué d'au moins un tapis roulant (18), recirculant parallèlement à l'axe de rotation (14) avec un mouvement pas à pas actionné par un ensemble moteur (19), pour l'alimentation de miches (2) en face de la plaque de cuisson (6) qui est la première dans la succession de plaques (6).

16. Appareil (1) selon la revendication 15, **caractérisé en ce qu'**une première partie (20) de l'ensemble moteur (19), comprenant la motorisation, est associée au corps (21) de l'appareil (1) et ne participe pas au mouvement de renversement du plan de chargement (13) alors qu'une seconde partie (22) de l'ensemble moteur (19) fait partie intégrante du mouvement de renversement du plan de chargement (13) et est a ccouplée à 1 a p remière p artie ( 2) s eulement lorsque 1 e p lan de chargement (13) se trouve dans la première configuration.

17. Appareil (1) selon la revendication 16, **caractérisé en ce que** quand le plan de chargement se trouve dans la première configuration, l'accouplement entre la première et la seconde partie (20, 22) de l'ensemble moteur (19) est donné par le contact entre des roues à friction (23).

18. Appareil (1) selon la revendication 17, **caractérisé en ce que** la première partie (20) est verticalement mobile en opposition à l'action de moyens de contraste élastiques (24), ces derniers étant chargés par l'appui de la seconde partie (22) sur la première partie (20) lorsque le plan de chargement (13) se trouve dans la première configuration.

19. Appareil (1) selon n'importe laquelle des revendications précédentes,
**caractérisé en ce que** les plaques de cuisson (6) sont réalisées en matériau métallique.

20. Appareil selon la revendication 19, **caractérisé en ce que** les plaques de cuisson (6) sont revêtues au moins supérieurement avec une couche de matériau anti-adhérent.

21. Appareil (1) selon n'importe laquelle des revendications précédentes,
**caractérisé en ce que** chaque plaque de cuisson (6) permet de charger et de traiter au moins deux miches minces sans agent levant (2) simultanément.

22. Appareil s elon 1 a revendication 21, c aractérisé e n c e q ue c haque p laque d e cuisson (6) permet de charger et de traiter une pluralité de miches fines sans agent levant (2) simultanément.
